# FASCICULE DE BREVET EUROPEEN

(11) **EP 3 434 536 B1**
(45) Date de publication et mention de la délivrance du brevet: **15.04.2020**
(21) Numéro de dépôt: 18184066.1
(22) Date de dépôt: 17.07.2018
(51) Int. Cl.: B60S 1/04

(54) **DISPOSITIF DE FIXATION POUR UN SYSTÈME DE TRINGLERIE D'ACTIONNEMENT D'ESSUIE-GLACES**
BEFESTIGUNGSVORRICHTUNG FÜR EIN GESTÄNGESYSTEM ZUR BETÄTIGUNG VON SCHEIBENWISCHERN
ATTACHMENT DEVICE FOR A WINDSCREEN WIPER LINKAGE SYSTEM

(30) Priorité: 28.07.2017 FR 1757254
(43) Date de publication de la demande: 30.01.2019
(73) Titulaire: Valeo Systèmes d'Essuyage, 78322 Le Mesnil Saint Denis (FR)
(72) Inventeur: KUCHLY, Nicolas, 63500 ISSOIRE (FR); VIARD, Robin, 63500 ISSOIRE (FR); BAUD, Frédéric, 63500 ISSOIRE (FR); RENOUX, Pascal, 63500 ISSOIRE (FR)
(74) Mandataire: Valeo Systèmes d'Essuyage

(56) Documents cités:
- FR-A1- 2 964 617
- FR-A1- 3 029 476

## Description

### DOMAINE TECHNIQUE

La présente invention concerne notamment un dispositif de fixation pour un système de tringlerie d'actionnement d'essuie-glaces, et un procédé d'utilisation d'un tel dispositif.

### ETAT DE L'ART

Une automobile est classiquement équipée d'essuie-glaces pour assurer un lavage du pare-brise et éviter que la vision qu'a le conducteur de son environnement ne soit perturbée. Ces essuie-glaces comprennent en général un bras d'entraînement, effectuant un mouvement de va-et-vient angulaire, et des balais allongés, porteurs eux-mêmes de lames racleuses réalisées en une matière élastique. Ces lames frottent contre le pare-brise et évacuent l'eau en l'amenant en dehors du champ de vision du conducteur. Les balais sont réalisés sous la forme, soit, dans une version classique, d'étriers articulés qui tiennent la lame racleuse en plusieurs endroits discrets en lui conférant un cintrage lui permettant d'épouser l'éventuelle courbure du pare-brise, soit, dans une version plus récente dénommée *"flat blade"* (pour "lame plate"), d'un ensemble semi-rigide qui maintient la lame racleuse sur toute sa longueur grâce à une ou des vertèbres de cintrage permettant d'appliquer le balai sur le pare-brise sans avoir à utiliser d'étriers.

Dans les deux solutions, le bras de chaque balai est relié par son extrémité opposée au balai à un système de tringlerie pour son entraînement en rotation.

Classiquement, un système de tringlerie comprend une bielle dont chaque extrémité longitudinale est articulée sur une manivelle solidaire en rotation d'un arbre d'entraînement d'un essuie-glace, et plus particulièrement de son bras.

Chaque extrémité longitudinale de la bielle porte une boîte à rotule dans laquelle est monté rotulant un maneton solidaire d'une extrémité d'une manivelle dont une extrémité opposée est solidaire d'un arbre d'entraînement d'un essuie-glace. Chaque arbre d'entrainement est guidé en rotation par un palier qui est porté par une platine de support fixée sur la carrosserie du véhicule.

Une platine d'un tel système de tringlerie, telle que la platine de support d'un palier, peut être fixée par des moyens de type vis-écrou à la carrosserie.

On a déjà proposé des solutions alternatives à cette technologie.

Le document FR-A1-2 952 881 décrit un mécanisme d'essuie-glace dont un palier comporte des éléments de glissière permettant son montage par coulissement sur des éléments de support solidaires de la carrosserie du véhicule. Le palier est déplacé dans une direction parallèle à l'axe du palier et perpendiculaire au plan de la carrosserie et le coulissement est réalisé jusqu'à ce que des moyens de blocage du palier et des éléments de support coopèrent ensemble et solidarisent le montage. Cette alternative n'est toutefois pas satisfaisante car elle est complexe et ne garantit pas une bonne retenue du palier en cas de rupture des moyens de blocage.

Le document FR-A1-3 029 476, qui est considéré comme l'état de la technique le plus proche de l'objet de la revendication 1, décrit un dispositif de fixation d'un palier d'essuie-glace, qui est monté sur la carrosserie du véhicule par deux déplacements successifs, respectivement en translation et en rotation. Le déplacement en translation dans une direction parallèle à l'axe du palier, permet d'engager des éléments en saillie d'une platine du palier dans des évidements de la carrosserie, et le déplacement en rotation autour de l'axe du palier permet de bloquer la platine vis-à-vis de la carrosserie, dans une direction parallèle à l'axe du palier. En fin de course de rotation, des moyens d'accrochage ou d'enclipsage permettent de verrouiller le montage. Cependant, cette alternative n'est également pas satisfaisante car elle est trop encombrante et également trop lourde, les différentes pièces étant réalisées en métal. De plus, l'effort nécessaire à la rotation précitée est très important et difficile à réaliser manuellement. Par ailleurs, cette technologie est limitée à une platine dont le palier a une certaine position et dont les déplacements sont réalisés vis-à-vis de l'axe de ce palier. Il ne paraît pas possible d'envisager l'utilisation d'une platine avec un palier ayant une autre position, dans la mesure où cela nuirait davantage à l'encombrement du dispositif.

L'invention propose un perfectionnement aux technologies existantes de fixation d'un système de tringlerie d'actionnement d'essuie-glaces, qui est simple, efficace et économique.

### EXPOSE DE L'INVENTION

L'invention propose un dispositif de fixation pour un système de tringlerie d'actionnement d'essuie-glaces, ce dispositif comportant une platine destinée à être fixée sur une carrosserie de véhicule, et au moins un organe de verrouillage porté par ladite platine ou rapporté sur celle-ci et destiné à coopérer avec ladite carrosserie pour verrouiller la fixation de la platine sur la carrosserie, ladite platine comportant au moins un élément en saillie ou en creux destiné à coopérer par engagement avec un élément complémentaire de ladite carrosserie lorsque la platine est montée et en appui sur ladite carrosserie, dans un plan de joint P, caractérisé en ce que ladite platine et ledit au moins un élément qu'elle porte sont configurés pour être déplacés en translation dans le plan de joint P, depuis une première position d'engagement/désengagement desdits éléments, jusqu'à une seconde position de blocage dans laquelle une course d'éloignement de la platine vis-à-vis de la carrosserie est empêchée ou limitée, dans une direction perpendiculaire audit plan de joint, et en ce que ledit organe de verrouillage est mobile, déformable ou déplaçable depuis une position de déverrouillage dans laquelle ladite platine peut être déplacée entre sa première et sa seconde position, et inversement, jusqu'à une position de verrouillage dans laquelle ledit organe est configuré pour coopérer avec ladite carrosserie pour immobiliser ladite platine dans sa seconde position.

L'invention propose ainsi d'assurer un blocage de la platine vis-à-vis de la carrosserie en déplaçant en translation la platine dans le plan de joint, puis d'assurer un verrouillage de l'assemblage au moyen de l'organe qui est soit rapporté, soit déformé, soit déplacé, et qui empêche la platine de revenir dans sa position initiale. Cette solution permet de résoudre au moins une partie des problèmes et inconvénients listés ci-dessus.

Le dispositif selon l'invention peut comprendre une ou plusieurs des caractéristiques suivantes, prises isolément les unes des autres ou en combinaison les unes avec les autres :
- ladite platine est une platine de support, en particulier d'un palier,
- ledit au moins un élément de la platine est en saillie sur une surface de la platine destinée à être en appui sur une face de réception de ladite carrosserie,
- ledit au moins un élément en saillie de la platine est fixe par rapport à la platine,
- ledit au moins un élément en saillie de la platine définit au moins un espace de glissement d'une portion de ladite carrosserie,
- ladite platine comprend au moins deux éléments en saillie espacés l'un de l'autre d'une distance prédéterminée,
- ledit au moins un élément de la platine est formé par une lumière traversante et débouchant sur ledit plan de joint P,
- ledit au moins un organe de verrouillage est rapporté et configuré pour être engagé, dans ladite position de verrouillage, dans au moins un premier orifice de ladite platine et au moins un second orifice de ladite carrosserie, lesdits premier et second orifices étant destinés à être alignés lorsque ladite platine est dans sa seconde position,
- ledit au moins un organe de verrouillage est configuré pour adopter une position stable intermédiaire dans laquelle il est engagé dans ledit au moins un orifice de ladite platine mais pas dans ledit au moins un orifice de ladite carrosserie, et pour autoriser un déplacement de ladite platine dans ladite première direction,
- ledit au moins un organe de verrouillage est configuré pour être déplacé dans une direction sensiblement perpendiculaire audit plan de joint P,
- ledit au moins un organe de verrouillage comprend une patte déformable formée d'une seule pièce avec le reste de ladite platine,
- ladite patte est déformable depuis ladite position de verrouillage dans laquelle elle est sensiblement libre sans contrainte et coopère par engagement avec un orifice de ladite carrosserie, et ladite position de déverrouillage dans laquelle elle est déformée et destinée à prendre appui sur ladite carrosserie dans ledit plan de joint P,
- ledit au moins un organe de verrouillage est mobile en rotation autour d'un axe sensiblement parallèle audit plan de joint P.

L'invention concerne également un système de tringlerie d'actionnement d'essuie-glaces, comportant au moins un dispositif tel que décrit ci-dessus.

La présente invention concerne également un ensemble comportant une carrosserie de véhicule et un dispositif tel que décrit ci-dessus, dans lequel ladite carrosserie comprend au moins un élément en creux ou en saillie complémentaire dudit au moins un élément de ladite platine, de façon à ce que lesdits éléments puissent coopérer ensemble par engagement lorsque la platine est montée et en appui sur ladite carrosserie, dans ledit plan de joint P.

L'ensemble selon l'invention peut comprendre une ou plusieurs des caractéristiques suivantes, prises isolément les unes des autres ou en combinaison les unes avec les autres :
- ledit au moins un élément de ladite carrosserie est en creux et comprend au moins une lumière traversante et débouchant dans ledit plan de joint P,
- ladite au moins une lumière a une forme générale en T, L ou de trou de serrure,
- ladite au moins une lumière comprend une portion élargie d'engagement et une portion plus étroite de blocage, ladite portion de blocage comportant deux bords périphériques en regard qui sont inclinés l'un par rapport à l'autre de façon à se rapprocher du côté opposé à ladite portion d'engagement.
- ladite carrosserie comprend un moyen qui est configuré pour coopérer avec ledit au moins un organe de verrouillage et qui est soit formé par ledit au moins un élément de ladite carrosserie, soit distinct de cet élément.

L'invention concerne également un procédé d'utilisation d'un dispositif tel que décrit ci-dessus, caractérisé en ce qu'il comprend :
- une étape de positionnement de ladite platine sur une carrosserie, de façon à ce que ladite platine soit montée et en appui sur ladite carrosserie, dans un plan de joint P, et que lesdits éléments coopèrent ensemble par engagement,
- une étape de déplacement en translation de ladite platine et dudit au moins un élément qu'elle porte, dans ledit plan de joint P, entre lesdites première et seconde positions, et de verrouillage ladite platine dans sa seconde position vis-à-vis de ladite carrosserie.

### DESCRIPTION DES FIGURES

L'invention sera mieux comprise et d'autres détails, caractéristiques et avantages de l'invention apparaîtront à la lecture de la description suivante faite à titre d'exemple non limitatif et en référence aux dessins annexés dans lesquels :
- la figure 1 est une vue schématique en perspective d'un système de tringlerie d'actionnement d'essuie-glaces d'un véhicule automobile, selon la technique antérieure,
- la figure 2 est une vue schématique en perspective d'un système de tringlerie d'actionnement d'essuie-glaces d'un véhicule automobile, selon l'invention,
- la figure 3 est une vue schématique en perspective d'une partie de carrosserie de la figure 2,
- la figure 4 est une vue schématique en perspective d'une platine de support pour le système de la figure 2,
- la figure 5 est une vue en coupe et à plus grande échelle de la platine de la figure 4,
- la figure 6 est une vue schématique en perspective d'un organe de verrouillage pour le système de la figure 2,
- les figures 7a à 7d sont des vues schématiques en perspective du système de la figure 2, et illustrent plusieurs étapes de fixation de ce système et d'utilisation du dispositif selon l'invention,
- la figure 8 est une vue schématique de dessous de la carrosserie et du système dans la position représentée à la figure 7d,
- la figure 9 est une vue similaire à celle de la figure 7d et illustrant une variante de réalisation d'un système selon l'invention,
- la figure 10 est une vue schématique en perspective d'une autre variante de réalisation d'un système de tringlerie d'actionnement d'essuie-glaces d'un véhicule automobile, selon l'invention,
- la figure 11 est une vue schématique en perspective d'une partie de carrosserie de la figure 10,
- la figure 12 est une vue schématique en perspective d'une platine de support pour le système de la figure 10,
- la figure 13 est une vue en coupe et à plus grande échelle de la platine de la figure 12,
- les figures 14a à 14e sont des vues schématiques en perspective du système de la figure 10, et illustrent plusieurs étapes de fixation de ce système et d'utilisation du dispositif selon l'invention,
- la figure 15 est une vue schématique de dessous de la carrosserie et du système dans la position représentée à la figure 14e,
- la figure 16 est une vue similaire à celle de la figure 11 et illustrant une variante de réalisation de la partie de carrosserie,
- la figure 17 est une vue schématique en perspective d'une autre variante de réalisation d'un système de tringlerie d'actionnement d'essuie-glaces d'un véhicule automobile, selon l'invention,
- la figure 18 est une vue schématique en perspective d'une partie de carrosserie de la figure 17,
- la figure 19 est une vue schématique en perspective d'une platine de support pour le système de la figure 17,
- la figure 20 est une vue schématique en perspective d'un organe de verrouillage pour le système de la figure 17, et
- les figures 21a à 21c sont des vues schématiques en perspective du système de la figure 17, et illustrent plusieurs étapes de fixation de ce système et d'utilisation du dispositif selon l'invention.

### DESCRIPTION DETAILLEE

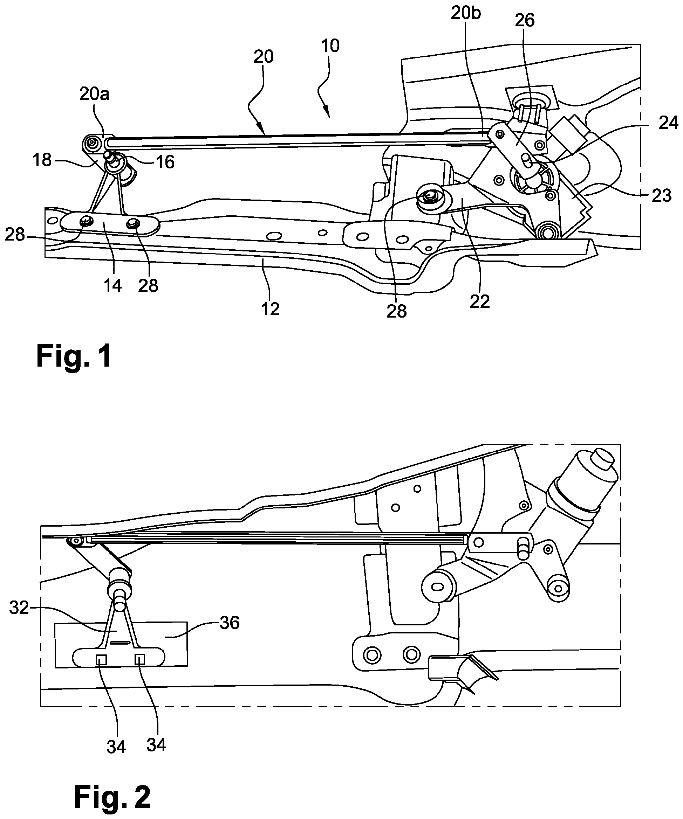

On se réfère d'abord à la figure 1 qui représente un système de tringlerie 10 pour l'actionnement d'essuie-glaces d'un véhicule automobile.

Le système 10 est typiquement fixé à la carrosserie 12 du véhicule et comprend une platine 14 de support d'un palier de guidage en rotation d'un arbre 16 d'entraînement d'un premier essuie-glace non représenté. Ce premier essuie-glace comprend classiquement un bras d'actionnement d'un balai d'essuyage, une extrémité longitudinale du bras étant solidarisée à l'arbre 16 et son extrémité longitudinale opposée étant raccordée au balai d'essuyage porteur d'une lame racleuse destinée à essuyer le pare-brise du véhicule.

L'arbre 16 est en outre solidaire en rotation d'une extrémité d'une manivelle 18 dont l'autre extrémité est articulée à une première extrémité longitudinale 20a d'une bielle 20.

Le système 10 comprend une autre platine 22 de support d'un motoréducteur électrique 23, dont l'arbre de sortie 24 est destiné à entraîner un second essuie-glace. Ce second essuie-glace, non représenté, est similaire à celui décrit dans ce qui précède.

L'arbre de sortie 24 est en outre solidaire en rotation d'une extrémité d'une manivelle 26 dont l'autre extrémité est articulée à une seconde extrémité longitudinale 20b de la bielle 20.

Dans la technique actuelle représentée à la figure 1, une platine du système 10, telle que la platine 14 ou la platine 22, est fixée à la carrosserie 12 par des moyens de fixation 28 classiques du type vis-écrou par exemple.

L'invention propose un perfectionnement à cette technologie.

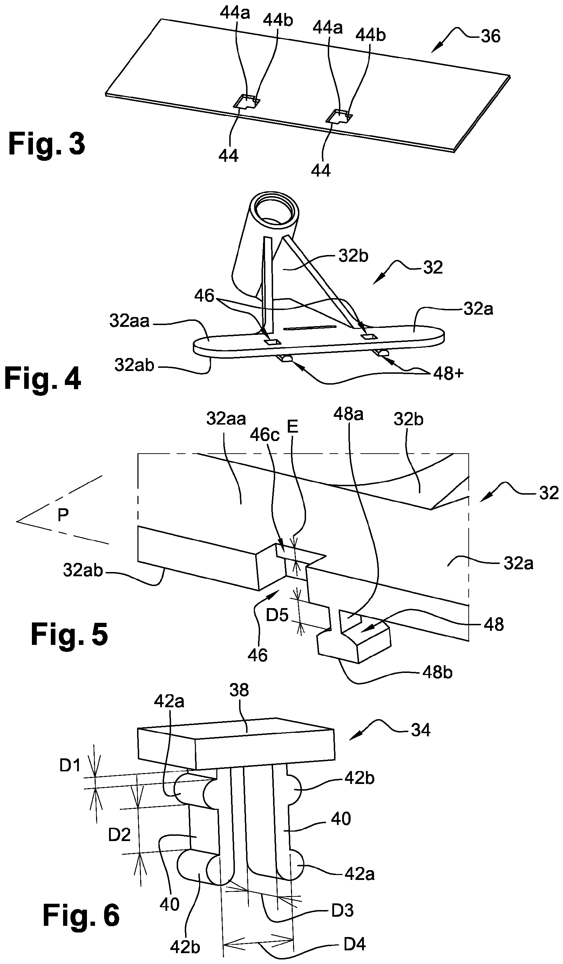

Selon un premier mode de réalisation représenté aux figures 2 à 8, l'invention propose un dispositif 30 de fixation comportant une platine 32 spécifique visible aux figures 4 et 5 et au moins un organe de verrouillage 34 visible à la figure 6. Le dispositif 30 est destiné à coopérer avec une carrosserie 36, ou portion de carrosserie, également spécifique et représentée à la figure 3.

Le dispositif 30 comprend ici deux organes 34 mais pourrait en comporter moins ou plus.

Chaque organe 34 (figure 6) comprend une tête 38 et deux jambes 40 sensiblement parallèles et reliées à une même surface, ici inférieure, de la tête.

La tête 38 a une forme générale parallélépipédique. Les jambes 40 sont écartées l'une de l'autre et ont une forme générale allongée. Une extrémité longitudinale de chaque jambe est reliée à la tête 38, et son extrémité longitudinale opposée est libre.

Les jambes 40 sont élastiquement déformables en flexion dans un plan passant par les jambes et perpendiculaire au plan de la tête 38.

Les jambes 40 portent des bourrelets 42a, 42b d'encliquetage élastique. Chaque jambe 40 porte un premier bourrelet 42a au niveau de son extrémité inférieure, et un second bourrelet 42b situé à une distance D1 prédéterminée de la tête 38 ainsi qu'à une distance D2 prédéterminée du bourrelet 42a, mesurées le long de l'axe d'allongement de la jambe. D2 est ici supérieure à D1.

Les bourrelets 42a, 42b ont en une forme générale en portion de cylindre et par exemple en demi cylindre comme dans l'exemple représenté. Les bourrelets 42a, 42b sont orientés vers l'extérieur, c'est-à-dire que les bourrelets d'une jambe sont orientés du côté opposé à l'autre jambe. Autrement dit, les bourrelets sont situés sur des faces externes des jambes. Ces faces externes sont séparées l'une de l'autre d'une distance D3. Enfin, la largeur des jambes est notée D4.

L'organe 34 est par exemple réalisé en matériau plastique.

La carrosserie 36 comprend deux orifices 44 ou lumières ici identiques. Chaque orifice 44 est destiné à recevoir un élément en saillie de la platine 32 ainsi que les jambes 40 d'un des organes 34.

Les orifices 44 sont à une distance prédéterminée l'un de l'autre. Dans l'exemple représenté, ils ont chacun une forme générale en T et comprennent deux portions : une portion élargie 44a et une portion amincie 44b.

Chacune des portions 44a, 44b a une forme générale rectangulaire, la portion amincie 44b pouvant avoir une forme générale trapézoïdale dont la petite base est située du côté opposé à la portion élargie 44a.

La portion 44a est dimensionnée pour coopérer par engagement avec un organe de verrouillage 34. Elle a pour cela une longueur proche de la distance D3 et une largeur légèrement supérieure à D4. On comprend ainsi que l'organe 34 peut être engagé dans l'orifice 44 et en particulier sa portion élargie 44a, ses bourrelets 42a étant aptes à coopérer par encliquetage élastique avec les bords périphériques en regard de cette portion élargie 44a.

La portion 44b est dimensionnée pour coopérer par engagement et coulissement avec un élément en saillie de la platine 32, qui est visible à la figure 5.

La platine 32 comprend une base 32a de fixation sur la carrosserie 36 et un bras 32b de support d'un palier. La base 32a est sensiblement plane et comprend une face supérieure 32aa et une face inférieure 32ab. La face inférieure 32ab est destinée à être appliquée sur une face de réception de la carrosserie 36 et la face supérieure est destinée à recevoir l'organe 34 et en particulier sa tête 38.

La platine 32 et en particulier sa base 32a comprend deux orifices 46 de passage des organes 34, chaque orifice 46 ayant ici une forme générale rectangulaire. Chaque orifice 46 est destiné à être aligné avec un des orifices 44 de la carrosserie, et plus particulièrement avec sa portion élargie 44a, en vue du montage d'un organe 34.

Chaque orifice 46 est ainsi dimensionné pour coopérer par engagement avec un organe 34 et a une longueur proche de de la distance D3 et une largeur légèrement supérieure à D4. On comprend ainsi que l'organe 34 peut être engagé dans l'orifice 46, ses bourrelets 42a et 42b étant séquentiellement aptes à coopérer par encliquetage élastique avec les bords périphériques 46c en regard de cet orifice 46.

La platine 32 a une certaine épaisseur et peut comprendre des amincissements au niveau des bords 46c pour autoriser l'encliquetage élastique de l'organe 34. Ainsi, l'épaisseur E des bords 46c, éventuellement amincie est de préférence inférieure ou égale à la distance D1.

Chaque organe 34 est destiné à coopérer avec la platine 32 et la carrosserie 36 par un double encliquetage élastique. Dans une position intermédiaire mais stable de l'organe sur la platine, par exemple une position de prémontage et de livraison du dispositif, les organes 34 sont engagés dans les orifices 46 de la platine de façon à ce que les bords amincis 46c de la platine soient situés entre les bourrelets 42a, 42b des jambes de l'organe. Cette position intermédiaire ne gêne pas la manipulation de la platine et son montage sur la carrosserie, en particulier si les bourrelets 42a sont conçus pour être logés dans le renfoncement créés sous les bords amincis 46c, du côté de la face inférieure 32ab de la platine. Dans ce cas, les bourrelets 42a ne gênent pas l'application de la platine sur la face de réception de la carrosserie.

Une fois que les orifices 44, 46 de la platine 32 et de la carrosserie 36 sont alignés, les organes 34 peuvent être enfoncés davantage dans les orifices 46 de la platine et jusque dans les orifices 44 de la carrosserie, de façon à ce que les bourrelets 42b s'encliquettent sous les bords amincis 46c et que les autres bourrelets 42a s'encliquètent sous la carrosserie. La distance D2 précitée est donc notamment fonction de l'épaisseur de la carrosserie, au niveau de ses orifices 44.

Comme annoncé plus haut, la platine 32 comprend des éléments en saillie 48, ici au nombre de deux, qui sont destinés à coopérer par engagement et coulissement avec les orifices 44 de la carrosserie 36.

Les éléments 48 sont en saillie sur la face inférieure 32ab de la platine. Ils sont situés à une distance prédéterminée l'un de l'autre, sensiblement égale à la distance entre les orifices 46, et sont disposés au voisinage de ces orifices 46, sur un même côté.

Chaque élément en saillie 48 a une forme générale de champignon et comprend une tige 48a et un chapeau 48b. La tige 48a s'étend entre la face inférieure 32ab de la platine et le chapeau 48b. La tige 48a est amincie par rapport au chapeau 48b et s'étend sensiblement perpendiculairement à la face 32ab.

Le chapeau 48b est donc plus large que la tige et définit avec la face inférieure 32ab un espace tout autour de la tige dans lequel peut coulisser la carrosserie 36. Du côté de cet espace, le chapeau 48b a une surface supérieure bombée pour contraindre la carrosserie lors du coulissement précité. La distance D5 entre le chapeau 48b et la face 32ab est donc notamment fonction de l'épaisseur de la carrosserie, en particulier au voisinage des orifices 44.

Le chapeau 48b a une forme générale parallélépipédique et a une longueur légèrement inférieure à celle de la portion élargie 44a de l'orifice 44, et supérieure à celle de la portion amincie 44b de cet orifice. Le chapeau a une largeur légèrement inférieure à celle de la portion élargie.

La tige 48a a également une forme générale parallélépipédique et a une largeur légèrement inférieure à la longueur de la portion amincie 44b de façon à pouvoir être engagée par coulissement dans cette portion 44b.

Par ailleurs, la distance entre chaque élément 48 et l'orifice 46 le plus proche est fonction de la distance entre les deux bords périphériques parallèles et en regard des portions 44a, 44b d'un même orifice 44, de façon à ce que, lorsque la tige 48a d'un élément est logée dans la portion amincie 44b d'un orifice 44, la portion élargie 44a de cet orifice puisse être alignée avec l'orifice 44 correspondant de la carrosserie.

La platine 32 est fixée à la carrosserie 36 en déplaçant la platine à deux reprises en translation, puis en rapportant les organes 34 dans les orifices 46, 44 de la platine et de la carrosserie.

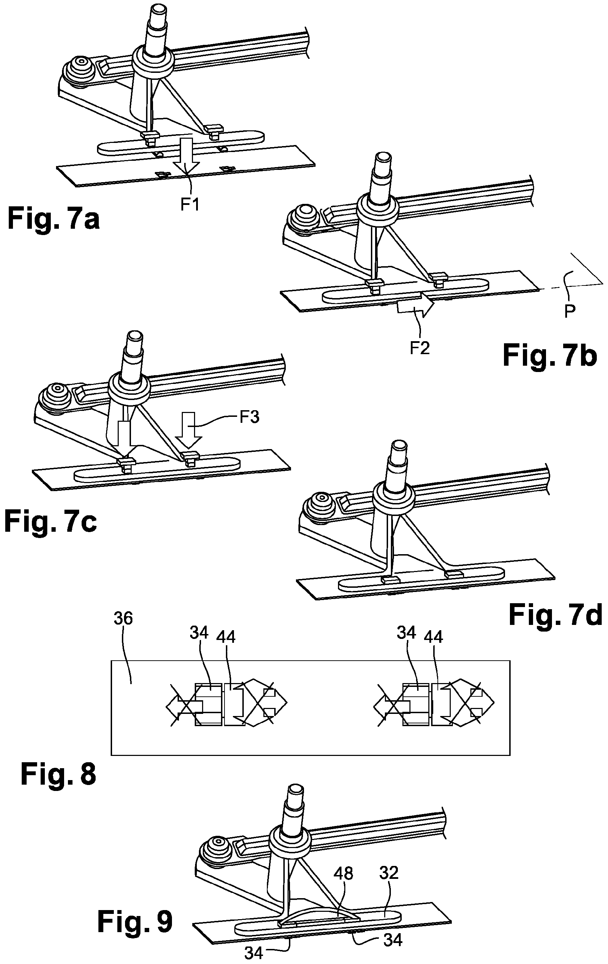

La platine 32 est tout d'abord disposée au-dessus de la carrosserie, parallèlement à celle-ci et de telle manière que les éléments en saillie 48 soient alignés avec les portions élargies 44a des orifices (figure 7a). La platine est alors déplacée en translation (flèche F1) dans une direction perpendiculaire au plan de la base 32a vers la carrosserie, jusqu'à ce que sa face inférieure 32ab prenne appui sur la face de réception de la carrosserie (figure 7b). On définit alors P comme étant le plan de joint de la platine et de la carrosserie, passant par les faces précitées. Durant cette translation, les éléments en saillie 48 sont engagés dans les portions élargies des orifices 44.

La platine est ensuite déplacée en translation (flèche F2) dans le plan de joint P, dans une direction telle que ses éléments en saillie 48, et en particulier ses tiges 48a, coulissent dans les portions 44b des orifices. Comme évoqué dans ce qui précède, cette portion 44b peut avoir une forme trapézoïdale de façon à ce que le déplacement soit plus difficile à mesure de l'éloignement de la tige de la portion 44a, ce qui garantit (grâce à des forces de frottement) un premier maintient de la platine vis-à-vis de la carrosserie. Les bords périphériques de la carrosserie, s'étendant autour des portions 44b, sont alors logés dans les espaces précités définis entre les chapeaux 48b des champignons et la face inférieure 32ab de la platine. Dans cette position, les portions 44a sont alignées avec les orifices 46 de la platine.

Les organes 34 sont alors rapportés dans les orifices 44, 46. Pour cela, ils sont disposés au-dessus de la platine de telle manière que leurs jambes 40 soient orientées vers les orifices 46 et prêts à être engagés dans ceux-ci. Ils sont alors déplacés en translation jusqu'à ce que leurs bourrelets 42a s'encliquètent sous les bords amincis 46c. La translation est poursuivi jusqu'à ce que les bourrelets 42b s'encliquètent sous les bords amincis 46c et que les bourrelets 42a s'encliquètent sous la carrosserie (flèche F3 - figure 7c). La platine est alors verrouillée dans la mesure où elle est empêchée de se déplacer dans le plan de joint P et que les éléments en saillie empêchent tout déplacement de la platine vis-à-vis de la carrosserie dans une direction perpendiculaire au plan de joint (figure 8).

En variante, et comme évoqué dans ce qui précède, les organes 34 peuvent être prémontés dans les orifices 46 de la platine avant le rapprochement de cette dernière vers la carrosserie, comme cela est montré aux figures 7a à 7d.

Dans la variante représentée à la figure 9, les deux organes 34 sont jointifs et formé d'une seule pièce avec un moyen de préhension 48 du type poignée qui est destiné à reposer sur la face supérieure de la platine 32 après encliquetage des organes sous la carrosserie.

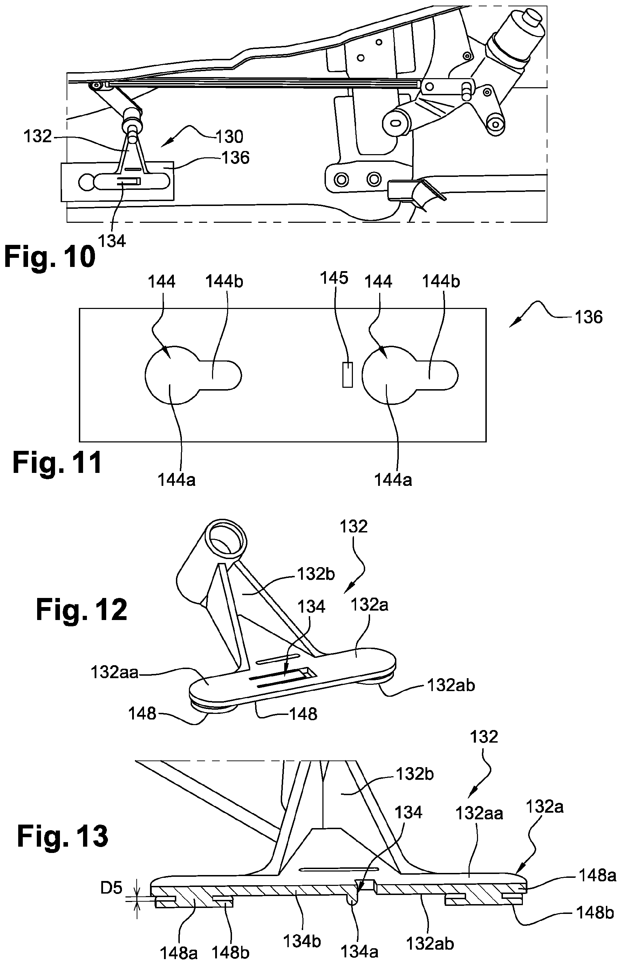

Selon un autre mode de réalisation représenté aux figures 10 à 15, l'invention propose un dispositif 130 de fixation comportant une platine 132 spécifique visible aux figures 12 et 13 et équipée d'au moins un organe de verrouillage 134. Le dispositif 130 est destiné à coopérer avec une carrosserie 136, ou portion de carrosserie, également spécifique et représentée à la figure 11.

La carrosserie 136 comprend deux orifices 144 ou lumières ici identiques. Chaque orifice 144 est destiné à recevoir un élément en saillie de la platine 132.

Les orifices 144 sont à une distance prédéterminée l'un de l'autre. Dans l'exemple représenté, ils ont chacun une forme générale en trou de serrure et comprennent deux portions : une portion élargie 144a et une portion amincie 144b.

La portion 144a a une forme générale circulaire. La portion 144b a une forme générale rectangulaire dont le bord périphérique, opposé à la portion 144a, est arrondie concave.

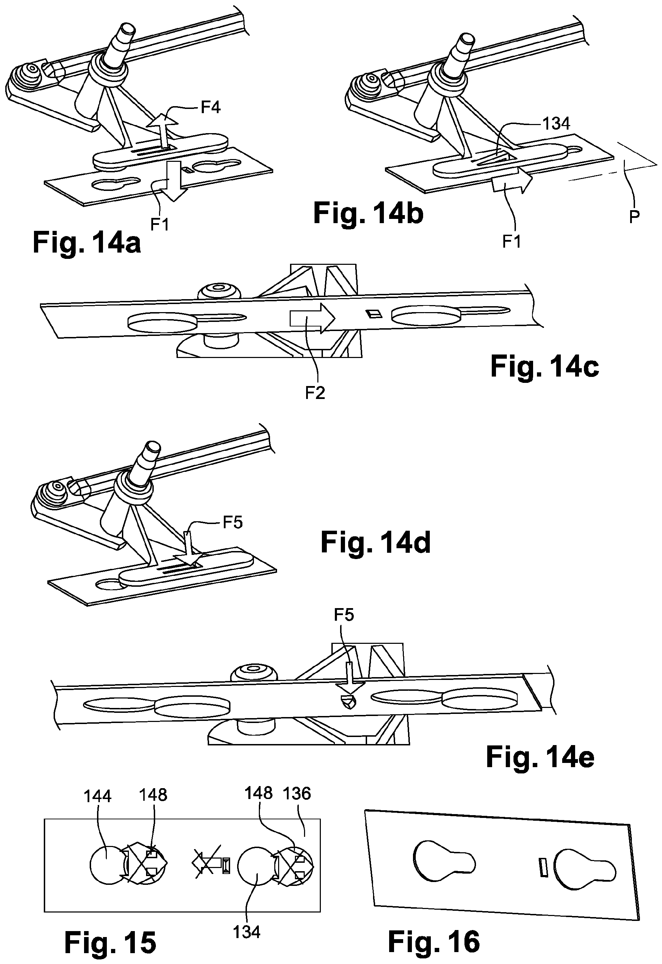

En variante, et comme représenté à la figure 16, les orifices pourraient avoir une forme différente avec par exemple un profil d'ampoule. La portion élargie serait alors reliée à la portion amincie par une portion en forme de trapèze, dont les bords latéraux convergent du côté de la portion amincie. Ceci permet de mieux garder la platine lors de son montage.

La portion 144a est dimensionnée pour coopérer par engagement avec un élément en saillie de la platine 132. La portion 144b est dimensionnée pour coopérer par engagement et coulissement avec cet élément en saillie.

La carrosserie comprend un autre orifice 145 ou une autre lumière, qui est à distance des orifices 144 et disposé ici entre eux. Cet orifice 145 a une forme générale rectangulaire dans l'exemple représenté. Les orifices 144 et 145 sont alignés sur une même ligne virtuelle.

La platine 132 comprend une base 132a de fixation sur la carrosserie 136 et un bras 132b de support d'un palier. La base 132a est sensiblement plane et comprend une face supérieure 132aa et une face inférieure 132ab. La face inférieure 132ab est destinée à être appliquée sur une face de réception de la carrosserie 136.

Le dispositif 130 comprend ici un seul organe 134 mais pourrait en comporter plus.

Chaque organe 134 (figures 12 et 13) comprend un ergot 134a porté par une patte 134b flexible. La patte 134b a une forme générale allongée dont une extrémité longitudinale est reliée au reste de la platine 132 et son extrémité opposée est libre et porte l'ergot 134a.

La patte 134b et l'ergot 134a sont formés d'une seule pièce avec le reste de la platine et la patte est délimitée sur trois de ses quatre côtés par une fente périphérique et traversante formée dans la base de la platine, sensiblement en son milieu (figure 12).

L'ergot 134a fait saillie sur la face inférieure 132ab de la platine lorsque la patte est à l'état libre sans contrainte (figure 13). La patte est déformable par flexion dans un plan perpendiculaire à la base et contenant l'axe d'allongement de la patte 134b.

L'ergot 134a est conformé pour coopérer par encliquetage élastique avec l'orifice 145 de la carrosserie.

La platine 132 et en particulier sa base 132a comprend des éléments en saillie 148, ici au nombre de deux, qui sont destinés à coopérer par engagement et coulissement avec les orifices 144 de la carrosserie 136.

Les éléments 148 sont en saillie sur la face inférieure 132ab de la platine. Ils sont situés à une distance prédéterminée l'un de l'autre, sensiblement égale à la distance entre les orifices 144.

Chaque élément en saillie 148 a une forme générale de champignon et comprend une tige 148a et un chapeau 148b. La tige 148a s'étend entre la face inférieure 132ab de la platine et le chapeau 148b. La tige 148a est amincie par rapport au chapeau 148b et s'étend sensiblement perpendiculairement à la face 132ab.

Le chapeau 148b est donc plus large que la tige et définit avec la face inférieure 132ab un espace tout autour de la tige dans lequel peut coulisser la carrosserie 136. La distance D5 entre le chapeau 148b et la face 132ab est donc notamment fonction de l'épaisseur de la carrosserie, en particulier au voisinage des orifices 144.

Le chapeau 148b a une forme générale cylindrique et a un diamètre légèrement inférieur à celui de la portion élargie 144a de l'orifice 144, et supérieur à la largeur de la portion amincie 144b de cet orifice.

La tige 148a a également une forme générale cylindrique et a un diamètre légèrement inférieur à la largeur de la portion amincie 144b de façon à pouvoir être engagée par coulissement dans cette portion 144b.

La platine 132 est fixée à la carrosserie 136 en déplaçant la platine à deux reprises en translation, jusqu'à l'encliquetage élastique des ergots 134a dans les orifices 145.

La platine 132 est tout d'abord disposée au-dessus de la carrosserie, parallèlement à celle-ci et de telle manière que les éléments en saillie 148 soient alignés avec les portions élargies 144a des orifices (figure 14a). La platine est alors déplacée en translation dans une direction perpendiculaire au plan de la base 132a vers la carrosserie, jusqu'à ce que sa face inférieure 132ab prenne appui sur la face de réception de la carrosserie (flèche F1). On définit alors P comme étant le plan de joint de la platine et de la carrosserie, passant par les faces précitées. Durant cette translation, les éléments en saillie 148 sont engagés dans les portions élargies des orifices 144. Une fois l'appui réalisé, l'ergot 134a prend appui sur la face supérieure 132aa de la platine et la patte 134 est déformée par flexion (flèche F4).

La platine est ensuite déplacée en translation dans le plan de joint P, dans une direction telle que ses éléments en saillie 148, et en particulier ses tiges 148a, coulissent dans les portions 144b des orifices (flèche F2 - figures 14b et 14c). Les bords périphériques de la carrosserie, s'étendant autour des portions 144b, sont alors logés dans les espaces précités définis entre les chapeaux 148b des champignons et la face inférieure 132ab de la platine.

Dans cette position, l'ergot 134a vient s'encliqueter dans l'orifice 145 de la carrosserie (flèche F5 - figure 14d et 14e). La platine est alors verrouillée dans la mesure où elle est empêchée de se déplacer dans le plan de joint P et que les éléments en saillie 148 empêchent tout déplacement de la platine vis-à-vis de la carrosserie dans une direction perpendiculaire au plan de joint (figure 15).

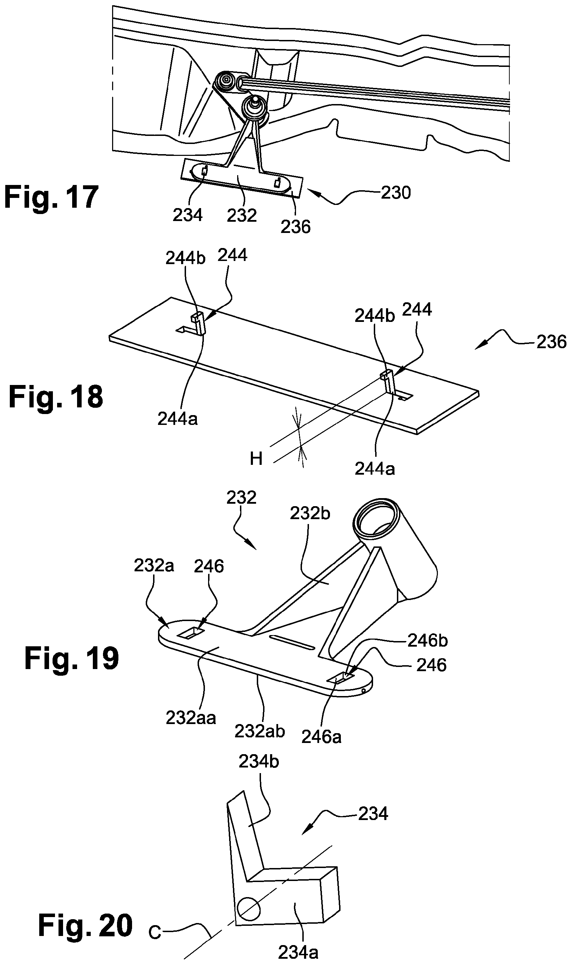

Selon un autre mode de réalisation représenté aux figures 17 à 21c, l'invention propose un dispositif 230 de fixation comportant une platine 232 spécifique visible à la figure 19 et équipée d'au moins un organe de verrouillage 234 visible à la figure 20. Le dispositif 230 est destiné à coopérer avec une carrosserie 236, ou portion de carrosserie, également spécifique et représentée à la figure 18.

La carrosserie 236 comprend deux pattes 244 obtenues par découpe et pliage de la carrosserie 236. Les pattes ont une forme générale en L et s'étendent sensiblement à angle droit par rapport au plan de la carrosserie. Elles sont en saillie sur la face de réception de la carrosserie 136, c'est-à-dire la face destinée à recevoir la platine 132.

Chaque patte 244 comprend deux portions rectilignes dont une 244a s'étend perpendiculairement à la face de réception précitée, et l'autre 244b parallèlement et à une distance H de cette face. Les pattes 244 sont à une distance prédéterminée l'une de l'autre.

La platine 232 comprend une base 232a de fixation sur la carrosserie 236 et un bras 232b de support d'un palier. La base 232a est sensiblement plane et comprend une face supérieure 232aa et une face inférieure 232ab. La face inférieure 232ab est destinée à être appliquée sur la face de réception de la carrosserie 236.

La base 232a comprend deux orifices 246 ou lumières destinés à coopérer par engagement et coulissement avec les pattes 244 de la carrosserie. Chaque orifice 246 a une forme générale en L et comprend deux portions. Une première portion 246a de chaque orifice a une forme rectiligne allongée et est conformée pour autoriser le passage de la patte 244, et en particulier de sa portion 244b, lors d'une translation de la platine 232 vers la carrosserie dans une direction sensiblement perpendiculaire au plan de la carrosserie. Une seconde portion 246b de chaque orifice a une forme rectiligne allongée et est conformée pour autoriser le passage de la patte 244, et en particulier de sa portion 244a, lors d'une translation de la platine 232 dans un plan de joint de la platine et de la carrosserie.

Le dispositif 230 comprend ici deux organes 134 mais pourrait en comporter moins ou plus.

Chaque organe 234 (figure 20) a une forme générale en L et comprend deux branches 234a, 234b dont la zone de liaison est articulée autour d'un axe transversal C. L'axe C est définit par une tige cylindrique (non représentée) qui traverse un orifice de l'organe 234 et qui est engagé dans des évidements de forme complémentaire prévus dans les orifices 246 de la platine.

La branche 234a de chaque organe 234 peut être configurée pour être manipulable et déplaçable manuellement, en vue du pivotement de l'organe 234 autour de l'axe C. L'autre branche 234b de l'organe peut être amincie et configurée pour coopérer par déformation élastique ou plastique avec la portion 244b d'une patte 244.

La platine 232 est fixée à la carrosserie 236 en déplaçant la platine à deux reprises en translation, comme évoqué dans ce qui précède, puis en faisant pivoter les organes 234 jusqu'au verrouillage de la platine 232 vis-à-vis de la carrosserie 236.

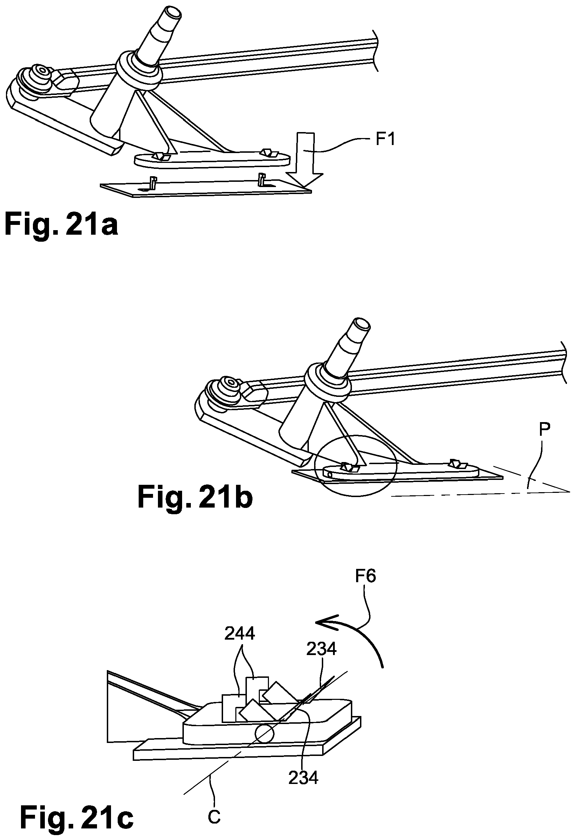

La platine 232 est tout d'abord disposée au-dessus de la carrosserie, parallèlement à celle-ci et de telle manière que ses orifices 246 soient alignés avec les pattes 244 de la carrosserie (figure 21a). La platine est alors déplacée en translation (flèche F1) dans une direction perpendiculaire au plan de la base 232a vers la carrosserie, jusqu'à ce que sa face inférieure 232ab prenne appui sur la face de réception de la carrosserie (figure 21b). On définit alors P comme étant le plan de joint de la platine et de la carrosserie, passant par les faces précitées. Durant cette translation, les pattes 244 sont engagées dans les portions 246a des orifices 246. La platine est ensuite déplacée en translation dans le plan de joint P, dans une direction telle que les pattes 244, et en particulier leurs portions 244a, coulissent dans les portions 234b des orifices. Les organes 234 sont alors déplacés en rotation autour de leurs axes C respectifs de façon à ce que leurs branches 234b viennent s'insérer entre les portions 244b des pattes et la face supérieure 232aa de la base de la platine, comme cela est visible à la figure 21c (flèche F6). La platine est alors verrouillée sur la carrosserie.

Le dispositif peut comprendre un nombre varié d'organes de fixation. Ce nombre dépend par exemple du dimensionnement de l'organe et des efforts auxquels il est destiné à être exposé en fonctionnement.

## Revendications

1. Dispositif (30, 130, 230) de fixation pour un système (10) de tringlerie d'actionnement d'essuie-glaces, ce dispositif comportant une platine (32, 132, 232) destinée à être fixée sur une carrosserie (36, 136, 236) de véhicule, et au moins un organe de verrouillage (34, 134, 234) porté par ladite platine ou rapporté sur celle-ci et destiné à coopérer avec ladite carrosserie pour verrouiller la fixation de la platine sur la carrosserie, ladite platine comportant au moins un élément en saillie (48, 148) ou en creux (246) destiné à coopérer par engagement avec un élément (44, 144, 244) complémentaire de ladite carrosserie lorsque la platine est montée et en appui sur ladite carrosserie, dans un plan de joint P, **caractérisé en ce que** ladite platine et ledit au moins un élément qu'elle porte sont configurés pour être déplacés en translation dans le plan de joint P, depuis une première position d'engagement/désengagement desdits éléments, jusqu'à une seconde position de blocage dans laquelle une course d'éloignement de la platine vis-à-vis de la carrosserie est empêchée ou limitée, dans une direction perpendiculaire audit plan de joint, et **en ce que** ledit organe de verrouillage est mobile, déformable ou déplaçable depuis une position de déverrouillage dans laquelle ladite platine peut être déplacée entre sa première et sa seconde position, et inversement, jusqu'à une position de verrouillage dans laquelle ledit organe est configuré pour coopérer avec ladite carrosserie pour immobiliser ladite platine dans sa seconde position.

2. Dispositif (30, 130, 230) selon la revendication précédente, dans lequel ladite platine (32, 132, 232) est une platine de support, en particulier d'un palier.

3. Dispositif (30, 130) selon la revendication 1 ou 2, dans lequel ledit au moins un élément (48, 148) de la platine (32, 132) est en saillie sur une surface (32ab, 132ab) de la platine destinée à être en appui sur une face de réception de ladite carrosserie (36, 136).

4. Dispositif (30, 130) selon la revendication précédente, dans lequel ledit au moins un élément en saillie (48, 148) de la platine (32, 132) est fixe par rapport à la platine.

5. Dispositif (30, 130) selon la revendication 3 ou 4, dans lequel ledit au moins un élément en saillie (48, 148) de la platine (32, 132) définit au moins un espace de glissement d'une portion de ladite carrosserie (36, 136).

6. Dispositif (30, 130) selon l'une des revendications 3 à 5, dans lequel ladite platine (32, 132) comprend au moins deux éléments en saillie (48, 148) espacés l'un de l'autre d'une distance prédéterminée.

7. Dispositif (230) selon la revendication 1 ou 2, dans lequel ledit au moins un élément (246) de la platine (232) est formé par une lumière traversante et débouchant sur ledit plan de joint P.

8. Dispositif (30) selon l'une des revendications précédentes, dans lequel ledit au moins un organe de verrouillage (34) est rapporté et configuré pour être engagé, dans ladite position de verrouillage, dans au moins un premier orifice (46) de ladite platine (32) et au moins un second orifice (44) de ladite carrosserie (36), lesdits premier et second orifices étant destinés à être alignés lorsque ladite platine est dans sa seconde position.

9. Dispositif (30) selon la revendication précédente, dans lequel ledit au moins un organe de verrouillage (34) est configuré pour adopter une position stable intermédiaire dans laquelle il est engagé dans ledit au moins un orifice (46) de ladite platine (32) mais pas dans ledit au moins un orifice (44) de ladite carrosserie (36), et pour autoriser un déplacement de ladite platine dans ladite première direction.

10. Dispositif (30) selon la revendication précédente, dans lequel ledit au moins un organe de verrouillage (34) est configuré pour être déplacé dans une direction sensiblement perpendiculaire audit plan de joint P.

11. Dispositif (130) selon l'une des revendications 1 à 7, dans lequel ledit au moins un organe de verrouillage (134) comprend une patte (134b) déformable formée d'une seule pièce avec le reste de ladite platine (132).

12. Dispositif (130) selon la revendication précédente, dans lequel ladite patte (134b) est déformable depuis ladite position de verrouillage dans laquelle elle est sensiblement libre sans contrainte et coopère par engagement avec un orifice de ladite carrosserie, et ladite position de déverrouillage dans laquelle elle est déformée et destinée à prendre appui sur ladite carrosserie (136) dans ledit plan de joint P.

13. Dispositif (230) selon l'une des revendications 1 à 7, dans lequel ledit au moins un organe de verrouillage (234) est mobile en rotation autour d'un axe (C) sensiblement parallèle audit plan de joint P.

14. Système (10) de tringlerie d'actionnement d'essuie-glaces, comportant au moins un dispositif (30, 130, 230) selon l'une des revendications précédentes.

15. Ensemble comportant une carrosserie (36, 136, 236) de véhicule et un dispositif (30, 130, 230) selon l'une des revendications 1 à 13 ou un système (10) selon la revendication précédente, dans lequel ladite carrosserie comprend au moins un élément en creux (44, 144) ou en saillie (244) complémentaire dudit au moins un élément (48, 148, 246) de ladite platine (32, 132, 232), de façon à ce que lesdits éléments puissent coopérer ensemble par engagement lorsque la platine est montée et en appui sur ladite carrosserie, dans ledit plan de joint P.

## Patentansprüche

1. Befestigungsvorrichtung (30, 130, 230) für ein Gestängesystem (10) zur Scheibenwischerbetätigung, wobei dieses System eine Platte (32, 132, 232) aufweist, die dazu bestimmt ist, an einer Fahrzeugkarosserie (36, 136, 236) befestigt zu werden, und mindestens ein Verriegelungsorgan (34, 134, 234), das von der Platte getragen wird oder an diese angesetzt ist und dazu bestimmt ist, mit der Karosserie zusammenzuwirken, um die Befestigung der Platte an der Karosserie zu verriegeln, wobei die Platte mindestens ein abstehendes Element (48, 148) oder ausgespartes Element (246) aufweist, das dazu bestimmt ist, durch Eingriff mit einem komplementär ausgebildeten Element (44, 144, 244) der Karosserie zusammenzuwirken, wenn die Platte montiert ist und in einer Trennebene P an der Karosserie anliegt, **dadurch gekennzeichnet, dass** die Platte und das mindestens eine Element, das sie trägt, dazu ausgestaltet sind, in der Trennebene P aus einer ersten Eingriff-/Löseposition der Elemente bis in eine zweite Arretierungsposition, in der eine Bewegung zum Entfernen der Platte von der Karosserie in eine senkrecht zu der Trennebene verlaufende Richtung verhindert oder begrenzt wird, translatorisch verlagert zu werden, und dadurch, dass das Verriegelungsorgan von einer Entriegelungsposition aus, in der die Platte zwischen ihrer ersten Position und ihrer zweiten Position und umgekehrt verlagert werden kann, bis zu einer Verriegelungsposition, in der das Organ dazu ausgestaltet ist, mit der Karosserie zusammenzuwirken, um die Platte in ihrer zweiten Position festzuhalten, beweglich, verformbar oder verlagerbar ist.

2. Vorrichtung (30, 130, 230) nach dem vorhergehenden Anspruch, bei der die Platte (32, 132, 232) eine Stützplatte ist, insbesondere ein Lager.

3. Vorrichtung (30, 130) nach Anspruch 1 oder 2, bei der das mindestens eine Element (48, 148) der Platte (32, 132) an einer Fläche (32ab, 132ab) der Platte absteht, die dazu bestimmt ist, an einer Aufnahmeseite der Karosserie (36, 136) anzuliegen.

4. Vorrichtung (30, 130) nach dem vorhergehenden Anspruch, bei der das mindestens eine abstehende Element (48, 148) der Platte (32, 132) in Bezug auf die Platte unbeweglich ist.

5. Vorrichtung (30, 130) nach Anspruch 3 oder 4, bei der das mindestens eine abstehende Element (48, 148) der Platte (32, 132) mindestens einen Gleitraum eines Abschnitts der Karosserie (36, 136) definiert.

6. Vorrichtung (30, 130) nach einem der Ansprüche 3 bis 5, bei der die Platte (32, 132) mindestens zwei abstehende Elemente (48, 148) umfasst, die um einen vorbestimmten Abstand voneinander beabstandet sind.

7. Vorrichtung (230) nach Anspruch 1 oder 2, bei der das mindestens eine Element (246) der Platte (232) durch einen durchgehenden und an der Trennebene P mündenden Spalt gebildet wird.

8. Vorrichtung (30) nach einem der vorhergehenden Ansprüche, bei der das mindestens eine Verriegelungsorgan (34) angesetzt ist und dazu ausgestaltet ist, in der Verriegelungsposition in mindestens eine erste Öffnung (46) der Platte (32) und mindestens eine zweite Öffnung (44) der Karosserie (36) zu greifen, wobei die erste und die zweite Öffnung dazu bestimmt sind zu fluchten, wenn die Platte in ihrer zweiten Position ist.

9. Vorrichtung (30) nach dem vorhergehenden Anspruch, bei der das mindestens eine Verriegelungsorgan (34) dazu ausgestaltet ist, eine stabile Zwischenposition einzunehmen, in der es in die mindestens eine Öffnung (46) der Platte (32), nicht jedoch in die mindestens eine Öffnung (44) der Karosserie (36) greift, und ein Verlagern der Platte in die erste Richtung zuzulassen.

10. Vorrichtung (30) nach dem vorhergehenden Anspruch, bei der das mindestens eine Verriegelungsorgan (34) dazu ausgestaltet ist, in eine im Wesentlichen senkrecht zur Trennebene P verlaufende Richtung verlagert zu werden.

11. Vorrichtung (130) nach einem der Ansprüche 1 bis 7, bei der das mindestens eine Verriegelungsorgan (134) einen verformbaren Lappen (134b) umfasst, der einstückig mit dem Rest der Platte (132) gebildet ist.

12. Vorrichtung (130) nach dem vorhergehenden Anspruch, bei welcher der Lappen (134b) aus der Verriegelungsposition, in der er im Wesentlichen spannungsfrei ist und durch Eingreifen mit einer Öffnung der Karosserie zusammenwirkt, und der Entriegelungsposition, in der er verformt ist und dazu bestimmt ist, in der Trennebene P auf der Karosserie (136) zur Anlage zu kommen, verformbar ist.

13. Vorrichtung (230) nach einem der Ansprüche 1 bis 7, bei der das mindestens eine Verriegelungsorgan (234) um eine im Wesentlichen parallel zur Trennebene P verlaufende Achse (C) herum drehbeweglich ist.

14. Gestängesystem (10) zur Scheibenwischerbetätigung, das mindestens eine Vorrichtung (30, 130, 230) nach einem der vorhergehenden Ansprüche aufweist.

15. Anordnung, die eine Fahrzeugkarosserie (36, 136, 236) und eine Vorrichtung (30, 130, 230) nach einem der Ansprüche 1 bis 13 oder ein System (10) nach dem vorhergehenden Anspruch aufweist, bei der die Karosserie mindestens ein ausgespartes Element (44, 144) oder abstehendes Element (244) umfasst, das komplementär zu dem mindestens einen Element (48, 148, 246) der Platte (32, 132, 232) ausgebildet ist, so dass die Elemente durch Eingriff zusammenwirken können, wenn die Platte montiert ist und in der Trennebene P an der Karosserie anliegt.

## Claims

1. Fixing device (30, 130, 230) for a windscreen wiper actuation linkage system (10), this device comprising a plate (32, 132, 232) intended to be fixed onto a vehicle body (36, 136, 236), and at least one locking member (34, 134, 234) borne by said plate or added thereto and intended to cooperate with said body to lock the fixing of the plate onto the body, said plate comprising at least one protruding element (48, 148) or hollowed element (246) intended to cooperate by engagement with a complementary element (44, 144, 244) of said body when the plate is mounted and bearing on said body, in a joint plane P, **characterized in that** said plate and said at least one element that it bears are configured to be displaced in translation in the joint plane P, from a first position of engagement/disengagement of said elements, to a blocking second position in which a travel of separation of the plate from the body is prevented or limited, in a direction at right angles to said joint plane, and **in that** said locking member is mobile, deformable or displaceable from an unlocking position in which said plate can be displaced between its first position and its second position, and vice versa, to a locking position in which said member is configured to cooperate with said body to immobilise said plate in its second position.

2. Device (30, 130, 230) according to the preceding claim, in which said plate (32, 132, 232) is a support plate, in particular of a bearing.

3. Device (30, 130) according to Claim 1 or 2, in which said at least one element (48, 148) of the plate (32, 132) protrudes on a surface (32ab, 132ab) of the plate intended to bear on a receiving face of said body (36, 136).

4. Device (30, 130) according to the preceding claim, in which said at least one protruding element (48, 148) of the plate (32, 132) is fixed relative to the plate.

5. Device (30, 130) according to Claim 3 or 4, in which said at least one protruding element (48, 148) of the plate (32, 132) defines at least one sliding space for a portion of said body (36, 136).

6. Device (30, 130) according to one of Claims 3 to 5, in which said plate (32, 132) comprises at least two protruding elements (48, 148) spaced apart from one another by a predetermined distance.

7. Device (230) according to Claim 1 or 2, in which said at least one element (246) of the plate (232) is formed by a through opening emerging on said joint plane P.

8. Device (30) according to one of the preceding claims, in which said at least one locking member (34) is added and configured to be engaged, in said locking position, in at least one first orifice (46) of said plate (32) and at least one second orifice (44) of said body (36), said first and second orifices being intended to be aligned when said plate is in its second position.

9. Device (30) according to the preceding claim, in which said at least one locking member (34) is configured to adopt an intermediate stable position in which it is engaged in said at least one orifice (46) of said plate (32) but not in said at least one orifice (44) of said body (36), and to allow a displacement of said plate in said first direction.

10. Device (30) according to the preceding claim, in which said at least one locking member (34) is configured to be displaced in a direction substantially at right angles to said joint plane P.

11. Device (130) according to one of Claims 1 to 7, in which said at least one locking member (134) comprises a deformable tab (134b) formed of a single piece with the rest of said plate (132).

12. Device (130) according to the preceding claim, in which said tab (134b) is deformable from said locking position in which it is substantially free without constraint and cooperates by engagement with an orifice of said body, and said unlocking position in which it is deformed and intended to bear on said body (136) in said joint plane P.

13. Device (230) according to one of Claims 1 to 7, in which said at least one locking member (234) is rotationally mobile about an axis (C) substantially parallel to said joint plane P.

14. Windscreen wiper actuation linkage system (10), comprising at least one device (30, 130, 230) according to one of the preceding claims.

15. Assembly comprising a vehicle body (36, 136, 236) and a device (30, 130, 230) according to one of Claims 1 to 13 or a system (10) according to the preceding claim, in which said body comprises at least one hollowed element (44, 144) or protruding element (244) complementing said at least one element (48, 148, 246) of said plate (32, 132, 232), so that said elements can cooperate together by engagement when the plate is mounted and bearing on said body, in said joint plane P.
